Europäisches Patentamt

European Patent Office

Office européen des brevets

(19)

(11) Publication number : **0 441 476 A2**

## (12) EUROPEAN PATENT APPLICATION

(21) Application number : **91300068.3**

(22) Date of filing : **04.01.91**

(51) Int. Cl.$^5$ : **B60T 11/16**

(30) Priority : **06.01.90 GB 9000299**

(43) Date of publication of application :
**14.08.91 Bulletin 91/33**

(84) Designated Contracting States :
**DE ES FR GB IT**

(71) Applicant : **LUCAS INDUSTRIES PUBLIC
LIMITED COMPANY**
**Brueton House, New Road**
**Solihull, West Midlands B91 3TX (GB)**

(72) Inventor : **Campbell, Roy**
**The Corner House, 1 Marlbrook Lane**
**Lickey Rock, Bromsgrove, B60 1HP (GB)**
Inventor : **Price, Anthony George**
**14 Meadow Lane**
**Croesyceiliog, Cwnbran, Gwent, NP44 2EY**
**(GB)**

(74) Representative : **Walte, Anthony William et al**
**MARKS & CLERK Alpha Tower Suffolk Street**
**Queensway**
**Birmingham B1 1TT (GB)**

(54) **Master cylinder apparatus.**

(57)    A master cylinder assembly has a pair of pressure cylinders (1) interconnected by a transfer passage (23) and each having a piston (3) slidable therein. The piston has a main seal (11) at its forward end and a piston extension (13) attached to the piston and extending forwardly of the seal. A forward part (32) of the extension is arranged with clearance within the cylinder and a rear part (13B) is a sliding fit within the cylinder such that after a predetermined working travel of the piston, during which compensatory fluid flow is permitted, the part (13B) of the extension reaches a position in which it blocks the transfer passage.

FIG.I.

# MASTER CYLINDER ASSEMBLY

This invention relates to a master cylinder assembly, primarily for a vehicle hydraulic braking system, and having a plurality of pressure cylinders between which extends a transfer passage controlled by valve means to permit communication between respective pressure chambers of the cylinders when the cylinders are actuated simultaneously and to prevent such communication when one of the cylinders is operated individually. Such an assembly is of particular use in an agricultural tractor, for example, in which straight line braking is accomplished by the simultaneous actuation of a pair of cylinders and steering assistance can be provided by actuating one or other of the cylinders.

In some master cylinder assemblies of the foregoing kind, the main piston pressure seals are disposed at the forward ends of the pistons which are provided with separately made forward extension members connected to the pistons and arranged to maintain the valve means in open condition so as to permit compensating fluid flow between the cylinders during part of the piston working travel.

It can be desirable to block off the compensating fluid flow after a predetermined part of the piston working travel has been completed and it is an object of the present invention to provide this facility in the foregoing kind of master cylinder assembly.

According to the invention, a portion of the piston extension is a close fit within the cylinder bore and arranged to interrupt communication between its associated cylinder and the transfer passage after the piston has moved through a predetermined part of its working travel.

Preferably, said portion of the piston extension extends forwardly from a region adjacent the main pressure seal.

The invention will now be described, by way of example, with reference to the accompanying drawings in which :-

Figure 1 is a longitudinal cross-section illustrating one of a pair of identical master cylinder constituting one form of the master cylinder assembly of the invention, and

Figure 2 is a view similar to Figure 1 illustrating an alternative embodiment of the master cylinder assembly of the invention.

The master cylinder assembly of the invention comprises a pair of identical master cylinders interconnected, as described hereafter, so as to function in an inter-dependent manner. Since the master cylinders are identical, only one will now be described.

The illustrated master cylinder comprises a body 1 having a longitudinal internal bore 2 along which slides a piston 3 actuated, in use, by a force input rod 4 engaging the piston by way of an enlarged head 5 which cooperates, when the piston is in its illustrated retracted position, with an abutment member 6 retained within the cylinder by a circlip 7 housed within a groove in the cylinder wall. The body 1 is provided with a radially extending flange 8 for the purpose of securing the master cylinder to a fixed support, such as a vehicle bulk head, by way of bolts or the like (not shown) passing through apertures 9 of the flange.

The forward end of the piston 3 is provided with a smaller diameter nose 10 which carries a main piston seal 11 engaged against the main forward end face of the piston. A further longitudinal projection 12 from the forward end of the nose 10 is received in a socket formed in the adjacent end of a separately made extension piece 13 projecting forwardly of the piston for the purpose to be described. The projection and socket cooperate to form a connection, preferably non-rigid, between the piston and extension piece, being held together axially by a ring 12A engaging in opposed grooves formed respectively in the projection and socket.

The body has a recuperation port 14 at the forward end of the bore 2 in the direction of working travel of the piston 3, the port being connectable to a fluid reservoir (not shown) by an axially extending port connection 15. The port 14 is controlled, in conventional manner, by a centre valve assembly, indicated generally at 16. A rearwardly extending stem 17 of the valve assembly is connected to the piston extension piece 13, the stem being accommodated in a longitudinal bore 13A of the extension piece 13 during forward travel of the latter with the piston during its actuating movement. A piston return spring 18 acts, at one of its ends, against part of the valve assembly 16 and at its other end against a cap 19 mounted on a forward reduced diameter end portion 20 of the piston extension, the cap co-acting with a head 21 of the stem 17 to retain the stem within the piston extension.

The portion of the bore 2 forwardly of the piston 3 forms a pressure chamber 2A which communicates via an outlet port 22 with a vehicle braking system (not shown). Typically, in the most common mode of use of the master cylinder assembly on an agricultural tractor for example, the pressure chamber 2A would be connected to a rear wheel brake at one side of the tractor and a corresponding pressure chamber of the other cylinder would be connected to a rear wheel brake on the other side of the tractor. Such an arrangement enables straight line braking to be achieved by actuating both master cylinders to brake both wheels simultaneously. Alternatively, the rear wheels may be braked independently for steering purposes by operating only one of the master cylinders.

Because the respective brakes are likely to wear at different rates, it is important for the pressure chambers of the two master cylinders of the master cylinder assembly to be interconnected, at least over an initial part of the working travel of the piston, in order to permit compensating fluid flow between the cylinders and thereby avoid pressure differences which would otherwise occur in the two cylinders.

For this purpose, a transfer passage 23 is connected between respective compensation ports 24 of the two cylinders by way of respective port connections 25, each of which incorporates a transfer valve assembly 26. Each such valve assembly includes a valve member 27 which carries a resilient valve element 28, operation of the valve member being controlled, in response to movement of the piston 3 and its extension, by way of a thrust member illustrated as a ball 29. The ball 29 normally rests, in the retracted position of the piston as shown, on a reduced diameter portion 30 of the piston extension 13, this being joined by an inclined portion 31 to an elongate portion 32 having a larger diameter than the portion 30 but spaced slightly from the cylinder internal wall. The remainder of the piston extension 13B rearwardly of the portion 32 is a close sliding fit within the bore 2, for the purpose to be described.

As will be well understood by a person skilled in the art, when one of the master cylinders of the master cylinder assembly is actuated, a short forward movement of the piston 3, together with the piston extension 13 will cause the spring 18 to be compressed, enabling the valve assembly 16 to close off the port 14 in order to isolate the fluid inlet port 15 from the pressure chamber 2A. Simultaneously, or shortly thereafter, engagement of the inclined surface 31 of the piston extension with the ball 29 will urge the ball outwardly, resulting in the valve member 28 being urged to its fully open position away from its opposing seat within the port 24. As the working travel of the piston continues, fluid under pressure is expelled through the outlet port 22 for brake actuation and, the portion 32 of the piston extension 13 is brought opposite the transfer port, enabling pressure fluid to flow through the transfer passage 23 and urge the valve member 28 of the inoperative master cylinder into its closed position. This causes the resilient portion on the underside of that valve member to yield, enabling the valve member to seat fully against the body and isolate the inoperative cylinder from the operative one. Once the piston 3 has travelled a sufficient distance to bring the close fitting portion 13B of the piston extension into register with the transfer port, this port is thereby substantially blocked for the remainder of the piston working travel, which ensures that virtually no pressure loss from the operative cylinder is possible via the transfer passage. Fluid is supplied to the brake through the outlet 22 throughout the entire stroke of the piston 3.

When both of the master cylinders are operated at the same time, the thrust members 29 are both urged to hold their associated valve members 27 away from the port seats so that the cylinder pressure spaces 2A are placed freely in communication in order to permit any necessary pressure compensation to take place as a result of differential wear of the brake friction linings. Such compensation will be effected over the initial part of the piston working travel, until the transfer ports are blocked off by the full diameter portions 13B of the piston extensions 13, as described above.

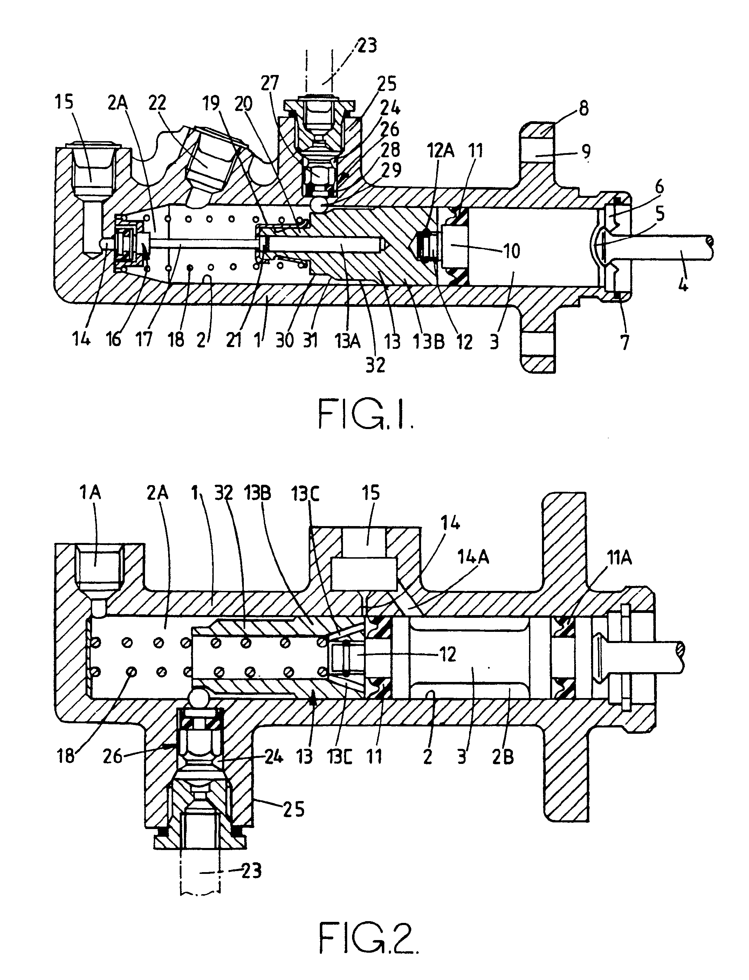

The master cylinder illustrated in Figure 2 is again one of an identical pair interconnected by a transfer passage 23, as previously. In this embodiment, in which the reference numerals of Figure 1 are used for corresponding parts, the body 1 has a longitudinal bore 2 with a forward pressure space 2A from which fluid under pressure is expelled via an outlet 1A to a brake for actuation thereof. Fluid flow through the transfer passage 23 is effected via a transfer port 24 controlled by a transfer valve assembly 26 identical in construction and operation with those of the previous embodiment.

The recuperation port 14 in this embodiment, through which replacement fluid is supplied from a reservoir (not shown) through a port 15, is disposed substantially centrally of the cylinder in the longitudinal direction thereof and the main seal 11 of the piston 3 is located just behind the recuperation port 14 when the piston is in its retracted position as illustrated. In this instance, the piston 3 is provided with an additional seal 11A at is rear end to preclude fluid leakage through the open cylinder end. A port 14A provides communication between the reservoir and the space 2B between the seals 11, 11A of the piston to ensure that no positive or negative build up of pressure can occur within this space during piston travel.

As in the previous embodiment, the piston 3 is provided with a piston extension 13 having a portion 32 of slightly smaller diameter than the internal diameter of the cylinder and a full diameter portion 13B which slides against the internal cylinder wall. This portion of the piston extension 13 is provided with passages 13C to permit communication between the pressure space 2A and the recuperation port for compensation purposes, when the piston is in its illustrated retracted position. In this embodiment, a forward projection 12 of the piston is received with clearance within a corresponding socket of the extension 13 to form a connection, preferably non-rigid.

When the piston 13 is moved forwardly for brake actuation, the seal 11 almost immediately blocks off the compensation port 14 enabling pressure to be established in the space 2A and pressure fluid supplied to the brake via the outlet 1A. The piston extension 13 operates the transfer valves 26 for both single and simultaneous master cylinder operation in the manner described in connection with the previous embodiment.

It will be understood that the pressure cylinders of the master cylinder assembly of the invention may be incorporated in a common body to form a "binocular" arrangement, instead of being separately formed, as in the described embodiment. The transfer port connection 25 of Figure 1 may be arranged diametrically opposite to the fluid outlet 15, as in the Figure 2 embodiment. Similarly, the transfer port connection 25 of Figure 2 may be arranged at the same side of the cylinder as the fluid outlet 1A as in the Figure 1 embodiment. In a further modification, the piston and its extension may be unconnected and merely abut one another, the extension being urged via the piston in one direction by inward force applied to the piston rod 4 and the piston being urged in the opposite direction, via the extension, by the return spring 18.

## Claims

1. A master cylinder assembly comprising a plurality of pressure cylinders (1) between which extends a transfer passage (23) controlled by valve means (26) to permit communication between respective pressure chambers (2A) of the cylinders (1) when the cylinders are actuated simultaneously and to prevent such communication when one of the cylinders is actuated individually, each cylinder having a piston (3) slidable therein, the pistons carrying respective pressure seals (11) adjacent their forward ends in the direction of their working travel and having respective forward extension members (13) arranged to maintain the valve means in open condition during part of the piston working travel, characterised in that a portion (13B) of each piston extension (13) is a close fit within its cylinder bore and arranged to interrupt communication between its associated cylinder (1) and the transfer passage (23) after the piston has moved through a predetermined part of its working travel.

2. A master cylinder assembly according to Claim 1, characterised in that each said piston extension portion (13B) extends forwardly from a region adjacent the main pressure seal (1).

3. A master cylinder assembly according to Claim 1 or Claim 2, characterised in that each cylinder has a fluid recuperation port (15) adjacent its end remote from the piston (3), fluid flow through the port (15) being controlled by a centre valve assembly (16) carried by the piston extension (13).

4. A master cylinder assembly according to any one of claims 1 to 3, characterised in that the transfer valve means (26) is disposed between the piston (3) and the recuperation port (15).

5. A master cylinder assembly according to Claim 1 or Claim 2, characterised in that each cylinder has a fluid recuperation port (15) in an intermediate position along the cylinder, fluid flow through the cylinder being controlled by the main pressure seal (11) which closes the port during the initial part of the piston working travel along the cylinder.

6. A master cylinder assembly according to Claim 5, characterised in that the transfer valve means (26) is disposed at the side of the recuperation port remote from the piston (3).

7. A master cylinder assembly according to any one of the preceding claims, characterised in that a portion (32) of the piston extension forward of the extension portion (13B) is of smaller diameter than the portion (13B) and acts to permit fluid flow through the transfer passage (23) until interruption of such flow is effected by the close-fitting extension portion (13B).

FIG.I.

FIG.2.